# EUROPEAN PATENT APPLICATION

(11) **EP 4 436 063 A1**
(43) Date of publication of application: **25.09.2024**
(21) Application number: 22894478.1
(22) Date of filing: 28.09.2022
(51) Int. Cl.: H04B 7/185, H04W 48/10, H04W 48/16, H04W 76/10, H04W 84/06

(54) **FEED LINK ESTABLISHMENT METHOD AND APPARATUS, AND STORAGE MEDIUM**

(30) Priority: 19.11.2021 CN 202111401785
(71) Applicant: Datang Mobile Communications Equipment Co., Ltd., Beijing 100085 (CN)
(72) Inventor: SUN, Jiancheng, Beijing 100085 (CN); ZHOU, Ye, Beijing 100085 (CN); LIANG, Jing, Beijing 100085 (CN)
(74) Representative: Studio Torta S.p.A.
(86) International application number: PCT/CN2022/122284
(87) International publication number: WO 2023/087940

(57) **Abstract**

The present disclosure provides a feeder link establishing method and apparatus, and a storage medium. The method includes: determining to provide a feeder service for a gateway station, and broadcasting a system message of a feeder cell; and configuring a feeder data radio bearer (DRB) for the gateway station, after a radio resource control (RRC) connection with the gateway station is established. The method realizes establishment of a feeder link.

## Description

The present disclosure claims priority to Chinese Patent Application No. 202111401785.X, filed to China National Intellectual Property Administration on November 19, 2021 and entitled "FEEDER LINK ESTABLISHING METHOD AND APPARATUS, AND STORAGE MEDIUM", which is hereby incorporated by reference in its entirety.

### TECHNICAL FIELD

The present disclosure relates to the field of communication technologies and, in particular, to a feeder link establishing method and apparatus, and a storage medium.

### BACKGROUND

Satellite Internet has advantages of wide coverage and little influence from natural disasters and physical attacks, and can be deeply integrated with a terrestrial mobile communication network, making up for a lack of coverage of the terrestrial mobile network, forming an advantage complementary, closely integrated and three-dimensional hierarchical integrated network system with the terrestrial network, and realizing information transmission and interaction on a global scale.

For a satellite in a regenerative mode, a base station is on the satellite, that is, a satellite-borne base station. The satellite-borne base station is connected to a gateway station via a feeder link, thus connected to a core network. At present, a protocol stack of feeder interfaces of the satellite-borne base station and the gateway station has not been standardized in relevant protocols, and there is no clear method on how to establish the feeder link.

### SUMMARY

The present disclosure provides a feeder link establishing method and apparatus, and a storage medium, which realize establishment of a feeder link.

In a first aspect, an embodiment of the present disclosure provides a feeder link establishing method, including:
determining to provide a feeder service for a gateway station, and broadcasting a system message of a feeder cell; and
configuring a feeder data radio bearer (DRB) for the gateway station, after a radio resource control (RRC) connection with the gateway station is established.

In an implementation, the determining to provide the feeder service for the gateway station includes:
determining to provide the feeder service for the gateway station, based on any one of configuration information or a satellite control command, where the configuration information is pre-configuration information or operation and maintenance management configuration information of a satellite-borne base station.

In an implementation, the configuration information includes location information and/or service time information of the gateway station.

In an implementation, the configuring the feeder data radio bearer DRB for the gateway station includes:
sending an RRC reconfiguration message to the gateway station, the RRC reconfiguration message being used to configure the feeder DRB for the gateway station.

In an implementation, the system message includes first indication information, the first indication information being used to indicate that a cell corresponding to the system message is a feeder cell.

In an implementation, the feeder cell is a dedicated feeder cell, and an access state of the feeder cell in the system message is a barred state.

In an implementation, the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

In an implementation, the method further includes:
releasing the feeder DRB and the RRC connection with the gateway station when it is determined to stop providing the feeder service for the gateway station.

In an implementation, the method further includes:
retaining context information of the gateway station when releasing the RRC connection with the gateway station, where a RRC connection release message includes second indication information, the second indication information being used to indicate an identity of the gateway station and/or to indicate a retention of the context information of the gateway station.

In a second aspect, an embodiment of the present disclosure provides a feeder link establishing method, including:
searching for a feeder cell, and establishing a radio resource control (RRC) connection with a satellite-borne base station based on the feeder cell obtained through the searching; and
receiving an RRC reconfiguration message sent by the satellite-borne base station, the RRC reconfiguration message being used to configure a feeder data radio bearer (DRB) for a gateway station.

In an implementation, the searching for the feeder cell includes:
searching for the feeder cell based on configuration information, where the configuration information is pre-configuration information or operation and maintenance management configuration information of the gateway station.

In an implementation, the configuration information includes one or more of feeder beam information, ephemeris information and service time information of the feeder cell.

In an implementation, a terminal type of the gateway station being a gateway station terminal and/or a reason for RRC establishment being feeder establishment is indicated to the satellite-borne base station in an RRC establishment request message, an RRC establishment completion message or a physical random access channel.

In an implementation, the method further includes:
receiving an RRC connection release message sent by the satellite-borne base station, where the RRC connection release message includes second indication information, the second indication information being used to indicate an identity of the gateway station and/or to indicate a retention of context information of the gateway station.

In an implementation, the method further includes:
sending an RRC connection recovery request to the satellite-borne base station based on the context information to recover the RRC connection with the satellite-borne base station and the feeder DRB.

In an implementation, the method further includes:
sending an RRC reestablishment request message to the satellite-borne base station to recover the RRC connection with the satellite-borne base station and the feeder DRB in a case where a feeder link between the gateway station and the satellite-borne base station is interrupted.

In a third aspect, an embodiment of the present disclosure provides a feeder link establishing apparatus, including a memory, a transceiver and a processor, where,
the memory is configured to store a computer program;
the transceiver is configured to transceive data under control of the processor; and
the processor is configured to read the computer program stored in the memory and perform the following operations:
   determining to provide a feeder service for a gateway station, and broadcasting a system message of a feeder cell; and
   configuring a feeder data radio bearer (DRB) for the gateway station, after a radio resource control (RRC) connection with the gateway station is established.

In an implementation, the processor is configured to perform the following operation:
determining to provide the feeder service for the gateway station, based on any one of configuration information or a satellite control command, where the configuration information is pre-configuration information or operation and maintenance management configuration information of a satellite-borne base station.

In an implementation, the configuration information includes location information and/or service time information of the gateway station.

In an implementation, the processor is configured to perform the following operation:
sending an RRC reconfiguration message to the gateway station, the RRC reconfiguration message being used to configure the feeder DRB for the gateway station.

In an implementation, the system message includes first indication information, the first indication information being used to indicate that a cell corresponding to the system message is a feeder cell.

In an implementation, the feeder cell is a dedicated feeder cell, and an access state of the feeder cell in the system message is a barred state.

In an implementation, the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

In an implementation, the processor is configured to perform the following operation:
releasing the feeder DRB and the RRC connection with the gateway station when it is determined to stop providing the feeder service for the gateway station.

In an implementation, the processor is configured to perform the following operation:
retaining context information of the gateway station when releasing the RRC connection with the gateway station, where an RRC connection release message includes second indication information, the second indication information being used to indicate an identity of the gateway station and/or to indicate a retention of the context information of the gateway station.

In a fourth aspect, an embodiment of the present disclosure provides a feeder link establishing apparatus, including a memory, a transceiver and a processor, where,
the memory is configured to store a computer program;
the transceiver is configured to transceive data under control of the processor; and
the processor is configured to read the computer program stored in the memory and perform the following operations:
   searching for a feeder cell, and establishing a radio resource control (RRC) connection with a satellite-borne base station based on the feeder cell obtained through the searching; and
   receiving an RRC reconfiguration message sent by the satellite-borne base station, the RRC reconfiguration message being used to configure a feeder data radio bearer (DRB) for the gateway station.

In an implementation, the processor is configured to perform the following operation:
searching for the feeder cell based on configuration information, where the configuration information is pre-configuration information or operation and maintenance management configuration information of the gateway station.

In an implementation, the configuration information includes one or more of feeder beam information, ephemeris information and service time information of the feeder cell.

In an implementation, a terminal type of the gateway station being a gateway station terminal and/or a reason for RRC establishment being feeder establishment is indicated to the satellite-borne base station in an RRC establishment request message, an RRC establishment completion message or a physical random access channel.

In an implementation, the processor is configured to perform the following operation:
receiving an RRC connection release message sent by the satellite-borne base station, where the RRC connection release message includes second indication information, the second indication information being used to indicate an identity of the gateway station and/or to indicate a retention of context information of the gateway station.

In an implementation, the processor is configured to perform the following operation:
sending an RRC connection recovery request to the satellite-borne base station based on the context information to recover the RRC connection with the satellite-borne base station and the feeder DRB.

In an implementation, the processor is configured to perform the following operation:
sending an RRC reestablishment request message to the satellite-borne base station to recover the RRC connection with the satellite-borne base station and the feeder DRB in a case where a feeder link between the gateway station and the satellite-borne base station is interrupted.

In a fifth aspect, an embodiment of the present disclosure provides a feeder link establishing apparatus, including:
a broadcasting unit, configured to determine to provide a feeder service for a gateway station and broadcast a system message of a feeder cell; and
a configuration unit, configured to configure a feeder data radio bearer (DRB) for the gateway station, after a radio resource control (RRC) connection with the gateway station is established.

In an implementation, the broadcasting unit is configured to:
determine to provide the feeder service for the gateway station, based on any one of configuration information or a satellite control command, where the configuration information is pre-configuration information or operation and maintenance management configuration information of a satellite-borne base station.

In an implementation, the configuration information includes location information and/or service time information of the gateway station.

In an implementation, the configuration unit is configured to:
send an RRC reconfiguration message to the gateway station, the RRC reconfiguration message being used to configure the feeder DRB for the gateway station.

In an implementation, the system message includes first indication information, the first indication information being used to indicate that a cell corresponding to the system message is a feeder cell.

In an implementation, the feeder cell is a dedicated feeder cell, and an access state of the feeder cell in the system message is a barred state.

In an implementation, the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

In an implementation, the apparatus further includes:
a releasing unit, configured to release the feeder DRB and the RRC connection with the gateway station when it is determined to stop providing the feeder service for the gateway station.

In an implementation, the releasing unit is configured to:
retain context information of the gateway station when releasing the RRC connection with the gateway station, where a RRC connection release message includes second indication information, the second indication information being used to indicate an identity of the gateway station and/or to indicate a retention of the context information of the gateway station.

In a sixth aspect, an embodiment of the present disclosure provides a feeder link establishing apparatus, including:
a connection unit, configured to search for a feeder cell and establish a radio resource control (RRC) connection with a satellite-borne base station based on the feeder cell obtained through the searching; and
a receiving unit, configured to receive an RRC reconfiguration message sent by the satellite-borne base station, the RRC reconfiguration message being used to configure a feeder data radio bearer (DRB) for the gateway station.

In an implementation, the connection unit is configured to:
search for the feeder cell based on configuration information, where the configuration information is pre-configuration information or operation and maintenance management configuration information of the gateway station.

In an implementation, the configuration information includes one or more of feeder beam information, ephemeris information and service time information of the feeder cell.

In an implementation, a terminal type of the gateway station being a gateway station terminal and/or a reason for RRC establishment being feeder establishment is indicated to the satellite-borne base station in an RRC establishment request message, an RRC establishment completion message or a physical random access channel.

In an implementation, the receiving unit is further configured to receive an RRC connection release message sent by the satellite-borne base station, where the RRC connection release message includes second indication information, the second indication information being used to indicate an identity of the gateway station and/or to indicate a retention of context information of the gateway station.

In an implementation, the apparatus further includes:
a recovery unit, configured to send an RRC connection recovery request to the satellite-borne base station based on the context information to recover the RRC connection with the satellite-borne base station and the feeder DRB.

In an implementation, the apparatus further includes:
a reestablishment unit, configured to send an RRC reestablishment request message to the satellite-borne base station to recover the RRC connection with the satellite-borne base station and the feeder DRB in a case where a feeder link between the gateway station and the satellite-borne base station is interrupted.

In a seventh aspect, the present disclosure provides a computer-readable storage medium, where the computer-readable storage medium has a computer program stored thereon, and the computer program is used to cause a computer to perform the method according to the first aspect and any implementation of the first aspect or the method according to the second aspect and any implementation of the second aspect.

In an eighth aspect, the present disclosure provides a computer program product, including a computer program, where when the computer program is executed by a processor, the method according to the first aspect and any implementation of the first aspect or the method according to the second aspect and any implementation of the second aspect is implemented.

The present disclosure provides a feeder link establishing method, an apparatus and a storage medium. In the method, a 5G air interface is used as a feeder bearer, and a satellite-borne base station determines to provide a feeder service for a gateway station and broadcasts a system message of a feeder cell, so that the gateway station can be used as a UE to select the feeder cell for access, and after a RRC connection between the satellite-borne base station and the gateway station is established, the satellite-borne base station configures a feeder DRB for the gateway station, thereby realizing establishment of a feeder link.

It should be understood that the content described in the above summary section is not intended to define key or important features of embodiments of the present invention, nor is it intended to limit the scope of the present invention. Other features of the present invention will be readily understood from the following description.

### BRIEF DESCRIPTION OF THE DRAWINGS

FIG. 1 is a schematic diagram of a network architecture based on a regenerative satellite according to an embodiment of the present disclosure.
FIG. 2 is a schematic flowchart I of a feeder link establishing method according to an embodiment of the present disclosure.
FIG. 3 is a schematic flowchart II of a feeder link establishing method according to an embodiment of the present disclosure.
FIG. 4 is a schematic flowchart III of a feeder link establishing method according to an embodiment of the present disclosure.
FIG. 5 is a schematic structural diagram I of a feeder link establishing apparatus according to an embodiment of the present disclosure.
FIG. 6 is a schematic structural diagram II of a feeder link establishing apparatus according to an embodiment of the present disclosure.
FIG. 7 is a schematic structural diagram III of a feeder link establishing apparatus according to an embodiment of the present disclosure.
FIG. 8 is a schematic structural diagram IV of a feeder link establishing apparatus according to an embodiment of the present disclosure.

### DESCRIPTION OF EMBODIMENTS

The term "and/or" in the present disclosure describes an association relationship among associated objects and denotes that three relationships may exist. For example, A and/or B may denote three situations that A exists alone; A and B exist at the same time; and B exists alone. The character "/" generally denotes that forward and backward associated objects are in an "or" relationship. The term "a plurality of' in the embodiments of the present disclosure refers to two or more, and other quantifiers are similar to it.

The technical solutions in the embodiments of the present disclosure will be clearly and completely described in the following with reference to the accompanying drawings in the embodiments of the present disclosure. It is obvious that the described embodiments are only a part of the embodiments of the present disclosure, but not all embodiments. All other embodiments obtained by those skilled in the art based on the embodiments of the present disclosure without inventive efforts are within the protection scope of the present disclosure.

The embodiments of the present disclosure provides a feeder link establishing method and apparatus, which provides an efficient feeder link establishing method through the integration of feeder air interface technology. The method and the apparatus are based on the same application concept, and because the principles of solving the problem are similar, for the embodiments of the method and the apparatus, reference can be made to each other, and the repetition is not repeated here.

The technical solutions provided in the embodiments of the present disclosure are suitable for various systems, especially for a 5G system. For example, the suitable system may be a global system of mobile communication (global system of mobile communication, GSM) system, a code division multiple access (code division multiple access, CDMA) system, a Wideband Code Division Multiple Access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G New Radio (New Radio, NR) system, etc. All of the various systems include terminal equipment and network equipment. The system may further include a core network part, such as an Evolved Packet System (Evolved Packet System, EPS), a 5G system (SGS).

The terminal equipment related to the embodiments of the present disclosure may refer to equipment providing voice and/or data connectivity to a user, handheld equipment with a wireless connection function, or other processing equipment connected to a wireless modem, etc. In different systems, the terminal equipment may also have different names. For example, in a 5G system, the terminal equipment may be referred to as User Equipment (User Equipment, UE). Wireless terminal equipment may communicate with one or more Core Networks (Core Networks, CNs) through a Radio Access Network (Radio Access Network, RAN). The wireless terminal equipment may be mobile terminal equipment, such as a mobile phone (or referred to as a "cellular" phone) and a computer with the mobile terminal equipment. For example, it may be a portable mobile device, a pocket mobile device, a handheld mobile device, a mobile device built in computer or a vehicle-mounted mobile device, and they exchange languages and/or data with a radio access network. For example, the wireless terminal equipment may be equipment such as a Personal Communication Service (Personal Communication Service, PCS) phone, a cordless phone, a Session Initiated Protocol (Session Initiated Protocol, SIP) phone, a Wireless Local Loop (Wireless Local Loop, WLL) station, and a Personal Digital Assistant (Personal Digital Assistant, PDA). The wireless terminal equipment may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The base station related to the embodiments of the present disclosure may include a plurality of cells providing services for a terminal. According to different specific application occasions, the base station may also be referred to as an access point or may be equipment communicating with the wireless terminal equipment through one or more sectors over the air interface in an access network, or other names. For example, the base station related to the embodiments of the present disclosure may be an evolutional network device (evolutional NodeB, eNB or e-NodeB) in a long term evolution (long term evolution, LTE) system, a 5G base station (gNB) in a 5G network architecture (next generation system), or may be a Home evolved Node B (Home evolved Node B, HeNB), a relay node (relay node), a femto (femto), a pico (pico), etc., which is not limited in the embodiments of the present disclosure. In some network structures, the base station may include a centralized unit (centralized unit, CU) node and a distributed unit (distributed unit, DU) node, and the centralized unit and the distributed unit may also be geographically separated.

Multi Input Multi Output (Multi Input Multi Output, MIMO) transmission may be performed between the base station and the terminal equipment by using one or more antennas respectively, and the MIMO transmission may be Single User MIMO (Single User MIMO, SU-MIMO) or Multiple User MIMO (Multiple User MIMO, MU-MIMO). According to the shape and number of an antenna combination, the MIMO transmission may be 2D-MIMO, 3D-MIMO, FD-MIMO or massive-MIMO, and it may also be diversity transmission, precoding transmission or beamforming transmission.

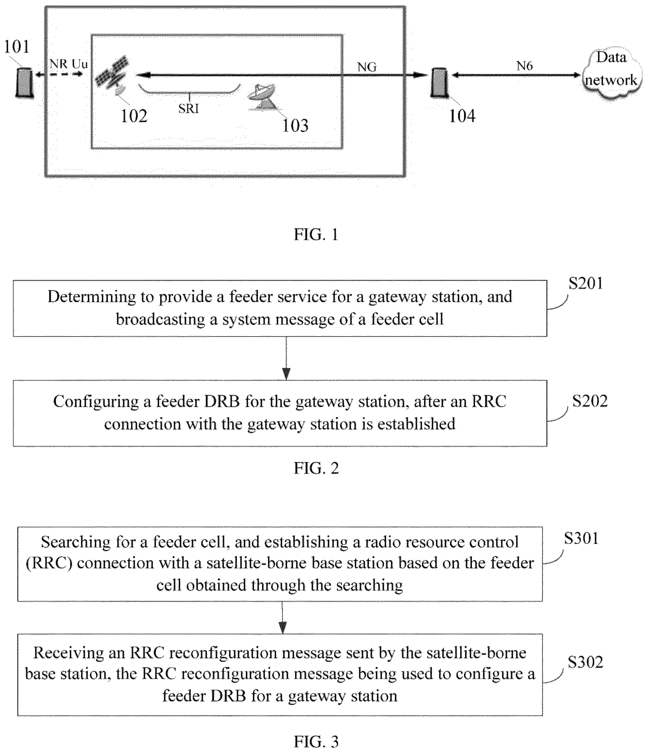

FIG. 1 is a schematic diagram of a network architecture based on a regenerative satellite according to an embodiment of the present disclosure. As shown in FIG. 1, the service link between the UE 101 and the satellite-borne base station 102 is an NR Uu interface, and the satellite-borne base station 102 is connected with the gateway station 103 (NTN gateway) through a feeder link, and then connected with the core network 104. The feeder link between the satellite-borne base station 102 and the gateway station 103 is a Satellite Radio Interface (Satellite Radio Interface, SRI). At present, a protocol stack of feeder interfaces of the satellite-borne base station and the gateway station has not been standardized in the relevant protocols, and there is no clear method on how to establish the feeder link.

For this reason, the embodiments of the present disclosure consider the feeder air interface integration technology, in which the 5G air interface is used as the feeder bearer and the gateway station is used as a UE to establish the feeder link with the satellite-borne base station. In the following, the feeder link establishing method provided in the present disclosure will be explained in detail through specific embodiments. It can be understood that the following specific embodiments may be combined with each other, and the same or similar concepts or processes may not be repeated in some embodiments.

FIG. 2 is a schematic flowchart I of a feeder link establishing method according to an embodiment of the present disclosure. The method is applied to a satellite-borne base station. As shown in FIG. 2, the method includes:
S201: determining to provide a feeder service for a gateway station, and broadcasting a system message of a feeder cell; and
S202: configuring a feeder Data Radio Bearer (Data Radio Bearer, DRB) for the gateway station, after a Radio Resource Control (Radio Resource Control, RRC) connection with the gateway station is established.

At a specific time point or location, the satellite-borne base station determines to start providing a feeder air interface service for a gateway station and to provide air interface coverage for the gateway station. Therefore, the satellite-borne base station activates a feeder beam (feeder cell) and broadcasts a system message of the feeder cell, so that the gateway station can be used as a UE to select the feeder cell for access.

After an RRC connection between the satellite-borne base station and the gateway station is established, the satellite-borne base station configures one or more feeder DRBs for the gateway station, where the number of a feeder DRB and related configuration information are determined by the implementation or pre-configuration of the satellite-borne base station. After the configuring of the feeder DRB is completed, that is, after a feeder link is established, it can carry signaling and data from a satellite terminal, the satellite-borne base station itself and other satellite base station.

In the embodiment of the present disclosure, the satellite-borne base station determines to provide the feeder service for the gateway station, and broadcasts the system message of the feeder cell, so that the gateway station can be used as a UE to select the feeder cell for access. After the RRC connection between the satellite-borne base station and the gateway station is established, the satellite-borne base station configures the feeder DRB for the gateway station, thus realizing the establishment of the feeder link.

FIG. 3 is a schematic flowchart II of a feeder link establishing method according to an embodiment of the present disclosure. The method is applied to a gateway station. As shown in FIG. 3, the method includes:
S301: searching for a feeder cell, and establishing a radio resource control (RRC) connection with a satellite-borne base station based on the feeder cell obtained through the searching; and
S302: receiving an RRC reconfiguration message sent by the satellite-borne base station, the RRC reconfiguration message being used to configure a feeder DRB for the gateway station.

In the embodiment of the present disclosure, the gateway station is used as a UE to initiate a search, synchronization and random access procedure for a feeder beam (feeder cell) at a specific time, and establish the RRC connection with the satellite-borne base station based on a system message of the feeder cell obtained through the searching.

After the establishment of the RRC connection between the gateway station and the satellite-borne base station is completed, the satellite-borne base station configures a feeder DRB for the gateway station through a RRC reconfiguration message, thus realizing the establishment of the feeder link.

In the embodiment of the present disclosure, the gateway station is used as a UE to search for the feeder cell, and establishes the RRC connection with the satellite-borne base station through the feeder cell, and then completes the configuring of the feeder DRB through the RRC reconfiguration message, thus realizing the establishment of the feeder link.

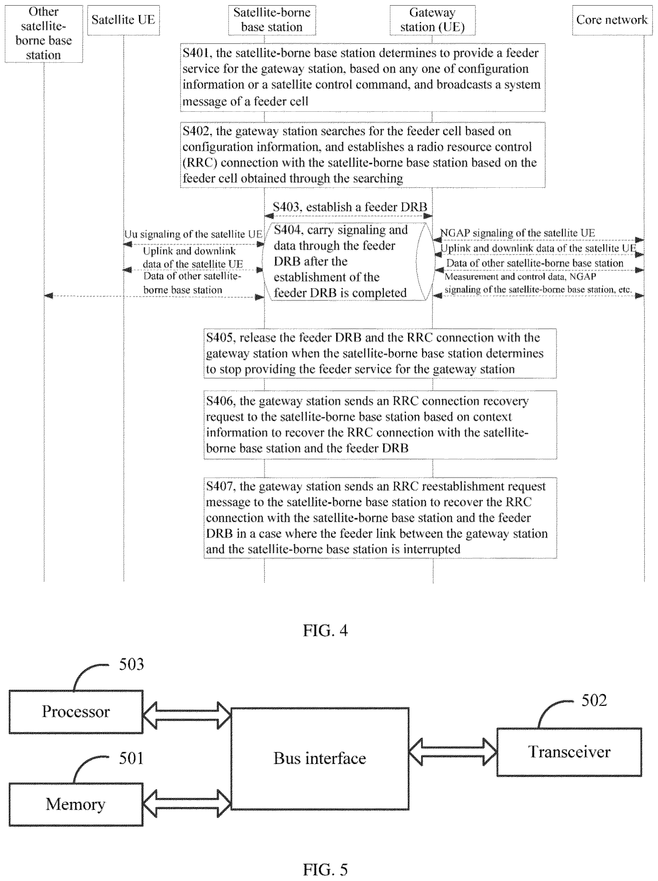

In the above embodiments, the establishment of the feeder link is explained from the perspectives of the satellite-borne base station and the gateway station respectively. In addition, after the establishment of the feeder link, the release, reestablishment, maintenance, switching of the feeder link and so on may further be involved, which will be described below with reference to FIG. 4 as shown.

S401: the satellite-borne base station determines to provide a feeder service for the gateway station, based on any one of configuration information or a satellite control command, and broadcasts a system message of a feeder cell.

The configuration information is pre-configuration information or operation and maintenance management configuration information of the satellite-borne base station.

Optionally, the configuration information includes location information and/or service time information of the gateway station, and the service time information may include service start time and service end time.

Based on the configuration information or the satellite control command, the satellite-borne base station determines to start providing a feeder air interface service for the gateway station at a specific time point or location, aims a corresponding feeder beam at the gateway station, activates configuration of a feeder cell, and starts broadcasting the system message of the feeder cell, so that the gateway station can be used as a UE to select the feeder cell for access.

Optionally, the system message includes first indication information, the first indication information being used to indicate that the cell corresponding to the system message is a feeder cell, so that the gateway station can determine, when searching for a cell, that the cell is a feeder cell through the first indication information in the system message.

Optionally, if the feeder cell is a dedicated feeder cell, that is, the feeder cell only supports the gateway station to access as a UE, but does not support the access of an ordinary satellite UE, an access state of the feeder cell in the system message from the satellite-borne base station is a barred state. For example, the access state of the feeder cell is set as barred in the Master Information Block (Master Information Block, MIB), thus preventing the ordinary satellite UE from accessing the feeder cell.

Optionally, if the feeder cell is a non-dedicated feeder cell, that is, the feeder cell not only supports the gateway station to access as a UE, but also supports the access of an ordinary satellite UE, then the access state of the feeder cell in the system message from the satellite-borne base station is a barred state before the configuring of the feeder DRB for the gateway station is completed by the satellite-borne base station. For example, the access state of the feeder cell is set as barred in the MIB, thus preventing, before the establishment of the feeder DRB is completed, the ordinary satellite terminal from accessing the feeder cell.

S402: the gateway station searches for the feeder cell based on configuration information, and establishes an RRC connection with the satellite-borne base station based on the feeder cell obtained through the searching.

The configuration information is pre-configuration information or operation and maintenance management configuration information of the gateway station.

Optionally, the configuration information includes one or more of feeder beam information, ephemeris information and service time information of the feeder cell. The feeder beam information may include information such as a frequency point, a PCI of a feeder beam. The ephemeris information may be used to determine the location of the satellite. The service time information of the feeder cell may include a service start time and a service end time.

The gateway station searches for the feeder cell based on the configuration information at a specific time or when the satellite arrives at a specific location. Optionally, the gateway station may determine, based on the first indication information in the system message of the cell obtained through the searching, the cell as a feeder cell, or the gateway station may determine the cell obtained through the searching as a feeder cell based on the feeder beam information, so as to access the satellite-borne base station through the feeder cell.

In the process of accessing the satellite-borne base station, the gateway station needs to indicate its corresponding network UE type and/or an access reason to the satellite-borne base station. Optionally, the gateway station may indicate to the satellite-borne base station in an RRC establishment request message or an RRC establishment completion message that the terminal type of the gateway station is a gateway station UE and/or that a reason for RRC establishment is feeder establishment, or the gateway station may also indicate to the satellite-borne base station in a physical random access channel through a special Physical Random Access Channel Occasion (Physical Random Access Channel Occasion, RO) or a preamble (preamble) that the terminal type of the gateway station is a gateway station UE and/or that a reason for RRC establishment is feeder establishment, so as to realize the RRC connection establishment between the gateway station and the satellite-borne base station.

S403: establish a feeder DRB.

Optionally, the satellite-borne base station sends an RRC reconfiguration message to the gateway station, the RRC reconfiguration message being used to configure the feeder DRB for the gateway station.

Optionally, if the feeder cell is a non-dedicated feeder cell, that is, the feeder cell not only supports the gateway station to access as a UE, but also supports the access of an ordinary satellite UE, then after the configuring of the feeder DRB for the gateway station is completed by the satellite-borne base station, the satellite-borne base station updates the system message, and the access state of the feeder cell in the system message is a not-barred state. For example, the access state of the feeder cell is set to notbarred in the System Information Block 1 (System Information Block 1, SIB 1), that is, the previously set barred state is canceled, so that the ordinary satellite can stay and initiate a service in the feeder cell.

Before the configuring of the feeder DRB for the gateway station is completed by the satellite-borne base station, the access state of the feeder cell in the system message is a barred state; and after the configuring of the feeder DRB for the gateway station is completed by the satellite-borne base station, the access state of the feeder cell in the system message is a not-barred state.

S404: carry signaling and data through the feeder DRB after the establishment of the feeder DRB is completed.

The feeder DRB may carry Uu signaling, uplink and downlink data and NGAP signaling of the satellite UE, data of other satellite-borne base station, and measurement and control data and NGAP signaling of the satellite-borne base station itself.

Through the above steps, the establishment of the feeder link and the bearing of signaling and data are realized. After the establishment of the feeder link, and after the satellite moves to a location far away from the gateway station or the service end time is reached, the satellite-borne base station can no longer provide the feeder service for the gateway station. At this time, the feeder link needs to be released, that is, the following step S405 is performed.

S405: release the feeder DRB and the RRC connection with the gateway station when the satellite-borne base station determines to stop providing the feeder service for the gateway station.

The satellite-borne base station may determine to stop providing the feeder service for the gateway station based on the configuration information or the satellite control command. At this time, the satellite-borne base station initiates the release of the feeder DRB and the RRC connection to delete the feeder link.

In an implementation, when releasing the feeder link, the satellite-borne base station may choose not to retain context information of the gateway station, and at the same time not to instruct the gateway station to retain the context information. In this case, when the satellite-borne base station provides the feeder service for the gateway station again, the process of establishing the feeder link is still as shown in S401-S403.

In another implementation, when releasing the feeder link, the satellite-borne base station may choose to retain the context of the gateway station. Optionally, when the satellite-borne base station releases the RRC connection with the gateway station, the satellite-borne base station retains the context information of the gateway station, and the RRC connection release message sent by the satellite-borne base station to the gateway station includes second indication information, the second indication information being used to indicate an identity of the gateway station and/or to indicate an retention of the context information of the gateway station.

Optionally, when retaining the context information of the gateway station, the satellite-borne base station assigns a corresponding identity to the gateway station, and sends the identity to the gateway station as the second indication information in the RRC connection release message, thus instructing the gateway station to retain the context information. Of course, the second indication information may also instruct the gateway station to retain the context information in other forms.

In the case where the satellite-borne base station and the gateway station retain the context information, when the satellite-borne base station provides the feeder service for the gateway station again, the gateway station can use the retained context information to initiate the rapid recovery of the feeder link, thus reducing the unnecessary overhead of air interface signaling. For example, the gateway station performs S406 described below to recover the feeder link.

S406: the gateway station sends an RRC connection recovery request to the satellite-borne base station based on context information to recover the RRC connection with the satellite-borne base station and the feeder DRB.

The release and reestablishment of the feeder link are explained through the above S405 and S406. In other scenarios, such as during the normal feeder service, the feeder link is interrupted, and the feeder link needs to be recovered at this time. For example, the gateway station performs S407 described below to recover the feeder link.

S407: the gateway station sends an RRC reestablishment request message to the satellite-borne base station to recover the RRC connection with the satellite-borne base station and the feeder DRB in a case where the feeder link between the gateway station and the satellite-borne base station is interrupted.

For example, in the event of link instability or even Radio Link Failure (Radio Link Failure, RLF) caused by extreme weather and other reasons, the gateway station UE completes the search and synchronization of the feeder beam based on ephemeris and configuration information (such as service time information of the feeder cell), and then completes the recovery of the feeder DRB through the RRC reestablishment process.

In addition to the above-mentioned scenarios, in the process of satellite movement, there will be switching of the feeder link, that is, the satellite-borne base station needs to switch from the current gateway station to establish the feeder link with the target gateway station.

For the target gateway station, the process of establishing the feeder link between the satellite-borne base station and the target gateway station is similar to that in S401-S403, and will not be repeated here. For an ordinary satellite UE served by the satellite-borne base station, the cell is unchanged during the feeder switching process, so the ordinary satellite UE may be insensitive to the feeder link switching process, but during the switching process, the satellite-borne base station needs to buffer uplink signaling and data from the ordinary satellite UE it serves, and send the buffered uplink signaling and data to the core network through a new feeder link after the feeder circuit switching is completed (including path switching).

FIG. 5 is a schematic structural diagram I of a feeder link establishing apparatus according to an embodiment of the present disclosure. As shown in FIG. 5, the apparatus includes a memory 501, a transceiver 502 and a processor 503.

The memory 501 is configured to store a computer program;
the transceiver 502 is configured to transceive data under control of the processor 503; and
the processor 503 is configured to read the computer program stored in the memory 501 and perform the following operations:
   determining to provide a feeder service for a gateway station, and broadcasting a system message of a feeder cell; and
   configuring a feeder data radio bearer (DRB) for the gateway station, after a radio resource control (RRC) connection with the gateway station is established.

In an implementation, the processor 503 is configured to perform the following operation:
determining to provide the feeder service for the gateway station, based on any one of configuration information or a satellite control command, where the configuration information is pre-configuration information or operation and maintenance management configuration information of a satellite-borne base station.

In an implementation, the configuration information includes location information and/or service time information of the gateway station.

In an implementation, the processor 503 is configured to perform the following operation:
sending an RRC reconfiguration message to the gateway station, the RRC reconfiguration message being used to configure the feeder DRB for the gateway station.

In an implementation, the system message includes first indication information, the first indication information being used to indicate that a cell corresponding to the system message is a feeder cell.

In an implementation, the feeder cell is a dedicated feeder cell, and an access state of the feeder cell in the system message is a barred state.

In an implementation, the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

In an implementation, the processor 503 is configured to perform the following operation:
releasing the feeder DRB and the RRC connection with the gateway station when it is determined to stop providing the feeder service for the gateway station.

In an implementation, the processor 503 is configured to perform the following operation:
retaining context information of the gateway station when releasing the RRC connection with the gateway station, where an RRC connection release message includes second indication information, the second indication information being used to indicate an identity of the gateway station and/or to indicate a retention of the context information of the gateway station.

It should be noted here that the above apparatus provided in the present disclosure can implement all the method steps implemented by the satellite-borne base station in the above method embodiment, and can achieve the same technical effect, so the parts and beneficial effects in this embodiment that are same with the method embodiment are not detailed here.

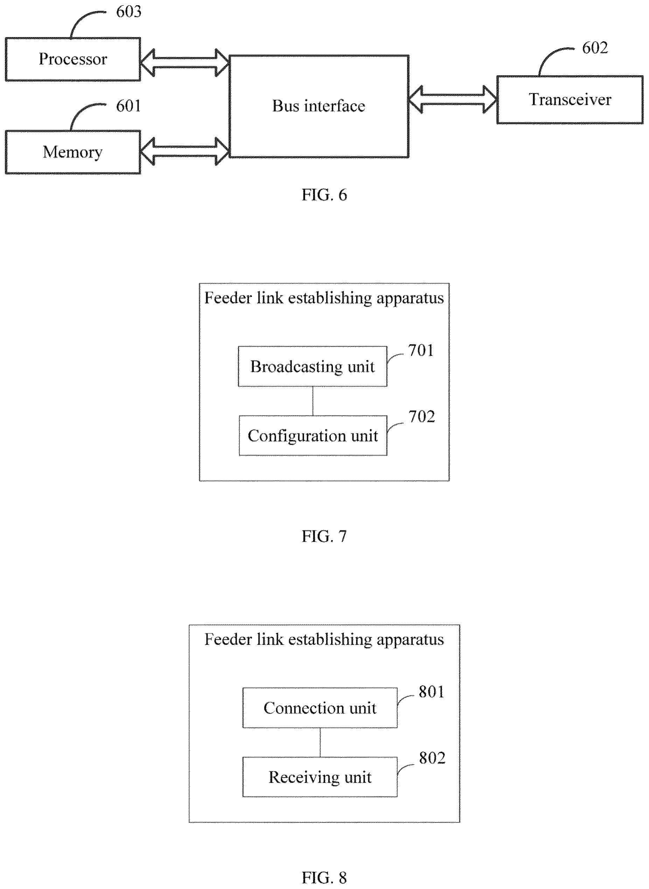

FIG. 6 is a schematic structural diagram II of a feeder link establishing apparatus according to an embodiment of the present disclosure. As shown in FIG. 6, the apparatus includes a memory 601, a transceiver 602 and a processor 603.

The memory 601 is configured to store a computer program;
the transceiver 602 is configured to transceive data under control of the processor 603; and
the processor 603 is configured to read the computer program stored in the memory 601 and perform the following operations:
   searching for a feeder cell, and establishing a radio resource control (RRC) connection with a satellite-borne base station based on the feeder cell obtained through the searching; and
   receiving an RRC reconfiguration message sent by the satellite-borne base station, the RRC reconfiguration message being used to configure a feeder data radio bearer (DRB) for a gateway station.

In an implementation, the processor 603 is configured to perform the following operation:
searching for the feeder cell based on configuration information, where the configuration information is pre-configuration information or operation and maintenance management configuration information of the gateway station.

In an implementation, the configuration information includes one or more of feeder beam information, ephemeris information and service time information of the feeder cell.

In an implementation, a terminal type of the gateway station being a gateway station terminal and/or a reason for RRC establishment being feeder establishment is indicated to the satellite-borne base station in an RRC establishment request message, an RRC establishment completion message or a physical random access channel.

In an implementation, the processor 603 is configured to perform the following operation:
receiving an RRC connection release message sent by the satellite-borne base station, where the RRC connection release message includes second indication information, the second indication information being used to indicate an identity of the gateway station and/or to indicate a retention of context information of the gateway station.

In an implementation, the processor 603 is configured to perform the following operation:
sending an RRC connection recovery request to the satellite-borne base station based on the context information to recover the RRC connection with the satellite-borne base station and the feeder DRB.

In an implementation, the processor 603 is configured to perform the following operation:
sending an RRC reestablishment request message to the satellite-borne base station to recover the RRC connection with the satellite-borne base station and the feeder DRB in a case where a feeder link between the gateway station and the satellite-borne base station is interrupted.

It should be noted here that the above apparatus provided in the present disclosure can implement all the method steps implemented by the gateway station in the above method embodiment, and can achieve the same technical effect, so the parts and beneficial effects in this embodiment that are same with the method embodiment are not detailed here.

FIG. 7 is a schematic structural diagram III of a feeder link establishing apparatus according to an embodiment of the present disclosure. As shown in FIG. 7, the apparatus includes:
a broadcasting unit 701, configured to determine to provide a feeder service for a gateway station and broadcast a system message of a feeder cell; and
a configuration unit 702, configured to configure a feeder data radio bearer (DRB) for the gateway station, after a radio resource control (RRC) connection with the gateway station is established.

In an implementation, the broadcasting unit 701 is configured to:
determine to provide the feeder service for the gateway station, based on any one of configuration information or a satellite control command, where the configuration information is pre-configuration information or operation and maintenance management configuration information of a satellite-borne base station.

In an implementation, the configuration information includes location information and/or service time information of the gateway station.

In an implementation, the configuration unit 702 is configured to:
send an RRC reconfiguration message to the gateway station, the RRC reconfiguration message being used to configure the feeder DRB for the gateway station.

In an implementation, the system message includes first indication information, the first indication information being used to indicate that a cell corresponding to the system message is a feeder cell.

In an implementation, the feeder cell is a dedicated feeder cell, and an access state of the feeder cell in the system message is a barred state.

In an implementation, the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

In an implementation, the apparatus further includes:
a releasing unit, configured to release the feeder DRB and the RRC connection with the gateway station when it is determined to stop providing the feeder service for the gateway station.

In an implementation, the releasing unit is configured to:
retain context information of the gateway station when releasing the RRC connection with the gateway station, where a RRC connection release message includes second indication information, the second indication information being used to indicate an identity of the gateway station and/or to indicate a retention of the context information of the gateway station.

It should be noted here that the above apparatus provided in the present disclosure can implement all the method steps implemented by the satellite-borne base station in the above method embodiment, and can achieve the same technical effect, so the parts and beneficial effects in this embodiment that are same with the method embodiment are not detailed here.

FIG. 8 is a schematic structural diagram IV of a feeder link establishing apparatus according to an embodiment of the present disclosure. As shown in FIG. 8, the apparatus includes:
a connection unit 801, configured to search for a feeder cell and establish a radio resource control (RRC) connection with a satellite-borne base station based on the feeder cell obtained through the searching; and
a receiving unit 802, configured to receive an RRC reconfiguration message sent by the satellite-borne base station, the RRC reconfiguration message being used to configure a feeder data radio bearer (DRB) for a gateway station.

In an implementation, the connection unit 801 is configured to:
search for the feeder cell based on configuration information, where the configuration information is pre-configuration information or operation and maintenance management configuration information of the gateway station.

In an implementation, the configuration information includes one or more of feeder beam information, ephemeris information and service time information of the feeder cell.

In an implementation, a terminal type of the gateway station being a gateway station terminal and/or a reason for RRC establishment being feeder establishment is indicated to the satellite-borne base station in an RRC establishment request message, an RRC establishment completion message or a physical random access channel.

In an implementation, the receiving unit 802 is further configured to receive an RRC connection release message sent by the satellite-borne base station, where the RRC connection release message includes second indication information, the second indication information being used to indicate an identity of the gateway station and/or to indicate a retention of context information of the gateway station.

In an implementation, the apparatus further includes:
a recovery unit, configured to send an RRC connection recovery request to the satellite-borne base station based on the context information to recover the RRC connection with the satellite-borne base station and the feeder DRB.

In an implementation, the apparatus further includes:
a reestablishment unit, configured to send an RRC reestablishment request message to the satellite-borne base station to recover the RRC connection with the satellite-borne base station and the feeder DRB in a case where a feeder link between the gateway station and the satellite-borne base station is interrupted.

It should be noted here that the above apparatus provided in the present disclosure can implement all the method steps implemented by the gateway station in the above method embodiment, and can achieve the same technical effect, so the parts and beneficial effects in this embodiment that are same with the method embodiment are not detailed here.

It should be noted that the division of units in the embodiments of the present disclosure is schematic and is only logic function division, and there may be other division manners during actual implementation. In addition, all the functional units in each of the embodiments of the present disclosure may be integrated in one processing unit, or all the units physically exist alone, or two or more units are integrated in one unit. The above-mentioned integrated unit may be realized in a form of hardware or a software functional unit.

When being realized in the form of the software functional unit and used as an independent product to be sold or used, the integrated unit may be stored in a processor-readable storage medium. Based on such understanding, the essences of the technical solutions of the present disclosure or parts thereof making contributions to the prior art or all or parts of the technical solutions may be embodied in a form of a software product, and the computer software product is stored in a storage medium and includes several instructions used to cause a computer device (which may be a personal computer, a server, or a network device, etc.) or a processor (processor) to perform all or parts of steps of the method in each of the embodiments of the present disclosure. The aforementioned storage medium includes various media, such as a U disk, a mobile hard disk, a Read-Only Memory (Read-Only Memory, ROM), a Random Access Memory (Random Access Memory, RAM), a diskette or an optical disk, capable of storing program codes.

An embodiment of the present disclosure further provides a computer-readable storage medium, where the computer-readable storage medium has a computer program stored thereon, and the computer program is configured to cause a computer to perform the method performed by the first network element or the method performed by the second network element in the above method embodiments.

The computer-readable storage medium may be any available medium or data storage device that can be accessed by a computer, which includes but is not limited to a magnetic memory (such as a floppy disk, a hard disk, a magnetic tape, and a magneto-optical disc (MO)), an optical memory (such as a CD, a DVD, a BD, and an HVD), and a semiconductor memory (such as an ROM, an EPROM, an EEPROM, a nonvolatile memory (NAND FLASH), and a solid-state disk (SSD)).

An embodiment of the present disclosure further provides a computer program product, including a computer program, and when the computer program is executed by a processor, the method performed by the first network element or the method performed by the second network element in the above method embodiments is implemented.

It should be understood by those skilled in the art that the embodiments of the present disclosure may be provided as a method, a system or a computer program product. Therefore, a form of a complete hardware embodiment, a complete software embodiment or a software and hardware aspect combined embodiment may be adopted in the present disclosure. Moreover, a form of a computer program product executed on one or more computer available storage media (including but not limited to a magnetic disk memory and an optical memory) including computer available program codes therein may be adopted in the present disclosure.

The present disclosure is described by referring to flowcharts and/or block diagrams of the method, device (system) and computer program product according to the embodiments of the present disclosure. It should be understood that each flow and/or block in the flowcharts and/or block diagrams as well as a combination of flows and/or blocks in the flowcharts and/or block diagrams may be implemented by computer-executable instructions. The computer-executable instructions may be provided to a general-purpose computer, a special-purpose computer, an embedded processor or processors of other programmable data processing devices to generate a machine, so that an apparatus for realizing functions specified in one or more flows in the flowcharts and/or one or more blocks in the block diagrams is generated through the instructions executed by the computer or the processors of other programmable data processing devices.

These processor-executable instructions may also be stored in a processor-readable memory capable of guiding the computer or other programmable data processing devices to work in a specific way, so that the instructions stored in the processor-readable memory generate a product including an instruction apparatus, and the instruction apparatus realizes the functions specified in the one or more flows in the flowcharts and/or one or more blocks in the block diagrams.

These processor-executable instructions may also be loaded in the computer or other programmable data processing devices, so that a series of operation steps are performed on the computer or other programmable data processing devices to generate processing realized by the computer, such that the instructions executed on the computer or other programmable data processing devices provide steps for realizing the functions specified in the one or more flows in the flowcharts and/or one or more blocks in the block diagrams.

Apparently, those skilled in the art can make various alterations and transformations on the present disclosure without departing from the spirit and scope of the present disclosure. In this way, if these alterations and transformations of the present disclosure fall within the scope of the claims of the present disclosure and equivalent technologies of the claims, the present disclosure is also intended to include these alterations and transformations.

## Claims

1. A feeder link establishing method, comprising:
determining to provide a feeder service for a gateway station, and broadcasting a system message of a feeder cell; and
configuring a feeder data radio bearer DRB for the gateway station, after a radio resource control RRC connection with the gateway station is established.

2. The method according to claim 1, wherein the determining to provide the feeder service for the gateway station comprises:
determining to provide the feeder service for the gateway station, based on any one of configuration information or a satellite control command, wherein the configuration information is pre-configuration information or operation and maintenance management configuration information of a satellite-borne base station.

3. The method according to claim 2, wherein the configuration information comprises location information and/or service time information of the gateway station.

4. The method according to any one of claims 1 to 3, wherein the configuring the feeder data radio bearer DRB for the gateway station comprises:
sending an RRC reconfiguration message to the gateway station, the RRC reconfiguration message being used to configure the feeder DRB for the gateway station.

5. The method according to any one of claims 1 to 3, wherein the system message comprises first indication information, the first indication information being used to indicate that a cell corresponding to the system message is a feeder cell.

6. The method according to any one of claims 1 to 3, wherein the feeder cell is a dedicated feeder cell, and an access state of the feeder cell in the system message is a barred state.

7. The method according to claim 6, wherein the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

8. The method according to any one of claims 1 to 3, wherein the method further comprises:
releasing the feeder DRB and the RRC connection with the gateway station when it is determined to stop providing the feeder service for the gateway station.

9. The method according to claim 8, wherein the method further comprises:
retaining context information of the gateway station when releasing the RRC connection with the gateway station, wherein an RRC connection release message comprises second indication information, the second indication information being used to indicate an identity of the gateway station and/or to indicate a retention of the context information of the gateway station.

10. A feeder link establishing method, comprising:
searching for a feeder cell, and establishing a radio resource control RRC connection with a satellite-borne base station based on the feeder cell obtained through the searching; and
receiving an RRC reconfiguration message sent by the satellite-borne base station, the RRC reconfiguration message being used to configure a feeder data radio bearer DRB for a gateway station.

11. The method according to claim 10, wherein the searching for the feeder cell comprises:
searching for the feeder cell based on configuration information, wherein the configuration information is pre-configuration information or operation and maintenance management configuration information of the gateway station.

12. The method according to claim 11, wherein the configuration information comprises one or more of feeder beam information, ephemeris information and service time information of the feeder cell.

13. The method according to claim 10, wherein a terminal type of the gateway station being a gateway station terminal and/or a reason for RRC establishment being feeder establishment is indicated to the satellite-borne base station in an RRC establishment request message, an RRC establishment completion message or a physical random access channel.

14. The method according to any one of claims 10 to 13, wherein the method further comprises:
receiving an RRC connection release message sent by the satellite-borne base station, wherein the RRC connection release message comprises second indication information, the second indication information being used to indicate an identity of the gateway station and/or to indicate a retention of context information of the gateway station.

15. The method according to claim 14, wherein the method further comprises:
sending an RRC connection recovery request to the satellite-borne base station based on the context information to recover the RRC connection with the satellite-borne base station and the feeder DRB.

16. The method according to any one of claims 10 to 13, wherein the method further comprises:
sending an RRC reestablishment request message to the satellite-borne base station to recover the RRC connection with the satellite-borne base station and the feeder DRB in a case where a feeder link between the gateway station and the satellite-borne base station is interrupted.

17. A feeder link establishing apparatus, comprising a memory, a transceiver and a processor, wherein,
the memory is configured to store a computer program;
the transceiver is configured to transceive data under control of the processor; and
the processor is configured to read the computer program stored in the memory and perform the following operations:
determining to provide a feeder service for a gateway station, and broadcasting a system message of a feeder cell; and
configuring a feeder data radio bearer DRB for the gateway station, after a radio resource control RRC connection with the gateway station is established.

18. The apparatus according to claim 17, wherein the processor is configured to perform the following operation:
determining to provide the feeder service for the gateway station, based on any one of configuration information or a satellite control command, wherein the configuration information is pre-configuration information or operation and maintenance management configuration information of a satellite-borne base station.

19. The apparatus according to claim 18, wherein the configuration information comprises location information and/or service time information of the gateway station.

20. The apparatus according to any one of claims 17 to 19, wherein the processor is configured to perform the following operation:
sending an RRC reconfiguration message to the gateway station, the RRC reconfiguration message being used to configure the feeder DRB for the gateway station.

21. The apparatus according to any one of claims 17 to 19, wherein the system message comprises first indication information, the first indication information being used to indicate that a cell corresponding to the system message is a feeder cell.

22. The apparatus according to any one of claims 17 to 19, wherein the feeder cell is a dedicated feeder cell, and an access state of the feeder cell in the system message is a barred state.

23. The apparatus according to claim 22, wherein the feeder cell is a non-dedicated feeder cell; before the configuring of the feeder DRB is completed, the access state of the feeder cell in the system message is the barred state; and after the configuring of the feeder DRB is completed, the access state of the feeder cell in the system message is a not-barred state.

24. The apparatus according to any one of claims 17 to 19, wherein the processor is configured to perform the following operation:
releasing the feeder DRB and the RRC connection with the gateway station when it is determined to stop providing the feeder service for the gateway station.

25. The apparatus according to claim 24, wherein the processor is configured to perform the following operation:
retaining context information of the gateway station when releasing the RRC connection with the gateway station, wherein an RRC connection release message comprises second indication information, the second indication information being used to indicate an identity of the gateway station and/or to indicate a retention of the context information of the gateway station.

26. A feeder link establishing apparatus, comprising a memory, a transceiver and a processor, wherein,
the memory is configured to store a computer program;
the transceiver is configured to transceive data under control of the processor; and
the processor is configured to read the computer program stored in the memory and perform the following operations:
searching for a feeder cell, and establishing a radio resource control RRC connection with a satellite-borne base station based on the feeder cell obtained through the searching; and
receiving an RRC reconfiguration message sent by the satellite-borne base station, the RRC reconfiguration message being used to configure a feeder data radio bearer DRB for a gateway station.

27. The apparatus according to claim 26, wherein the processor is configured to perform the following operation:
searching for the feeder cell based on configuration information, wherein the configuration information is pre-configuration information or operation and maintenance management configuration information of the gateway station.

28. The apparatus according to claim 27, wherein the configuration information comprises one or more of feeder beam information, ephemeris information and service time information of the feeder cell.

29. The apparatus according to claim 26, wherein a terminal type of the gateway station being a gateway station terminal and/or a reason for RRC establishment being feeder establishment is indicated to the satellite-borne base station in an RRC establishment request message, an RRC establishment completion message or a physical random access channel.

30. The apparatus according to any one of claims 26 to 29, wherein the processor is configured to perform the following operation:
receiving an RRC connection release message sent by the satellite-borne base station, wherein the RRC connection release message comprises second indication information, the second indication information being used to indicate an identity of the gateway station and/or to indicate a retention of context information of the gateway station.

31. The apparatus according to claim 30, wherein the processor is configured to perform the following operation:
sending an RRC connection recovery request to the satellite-borne base station based on the context information to recover the RRC connection with the satellite-borne base station and the feeder DRB.

32. The apparatus according to any one of claims 26 to 29, wherein the processor is configured to perform the following operation:
sending an RRC reestablishment request message to the satellite-borne base station to recover the RRC connection with the satellite-borne base station and the feeder DRB in a case where a feeder link between the gateway station and the satellite-borne base station is interrupted.

33. A feeder link establishing apparatus, comprising:
a broadcasting unit, configured to determine to provide a feeder service for a gateway station and broadcast a system message of a feeder cell; and
a configuration unit, configured to configure a feeder data radio bearer DRB for the gateway station, after a radio resource control RRC connection with the gateway station is established.

34. The apparatus according to claim 33, wherein the broadcasting unit is configured to:
determine to provide the feeder service for the gateway station, based on any one of configuration information or a satellite control command, wherein the configuration information is pre-configuration information or operation and maintenance management configuration information of a satellite-borne base station.

35. The apparatus according to claim 34, wherein the configuration information comprises location information and/or service time information of the gateway station.

36. The apparatus according to any one of claims 33 to 35, wherein the apparatus further comprises:
a releasing unit, configured to release the feeder DRB and the RRC connection with the gateway station when it is determined to stop providing the feeder service for the gateway station.

37. A feeder link establishing apparatus, comprising:
a connection unit, configured to search for a feeder cell and establish a radio resource control RRC connection with a satellite-borne base station based on the feeder cell obtained through the searching; and
a receiving unit, configured to receive an RRC reconfiguration message sent by the satellite-borne base station, the RRC reconfiguration message being used to configure a feeder data radio bearer DRB for a gateway station.

38. The apparatus according to claim 37, wherein the connection unit is configured to:
search for the feeder cell based on configuration information, wherein the configuration information is pre-configuration information or operation and maintenance management configuration information of the gateway station.

39. The apparatus according to claim 38, wherein the configuration information comprises one or more of feeder beam information, ephemeris information and service time information of the feeder cell.

40. A computer-readable storage medium, wherein the computer-readable storage medium has a computer program stored thereon, and the computer program is used to cause a computer to perform the method according to any one of claims 1 to 16.

41. A computer program product, comprising a computer program, wherein when the computer program is executed by a processor, the method according to any one of claims 1 to 16 is implemented.
